# EUROPEAN PATENT APPLICATION

(11) **EP 1 770 700 A2**
(43) Date of publication of application: **04.04.2007**
(21) Application number: 06254680.9
(22) Date of filing: 08.09.2006
(51) Int. Cl.: G11B 20/00

(54) **Recording and reproducing apparatus**

(30) Priority: 29.09.2005 JP 2005284614
(71) Applicant: ORION ELECTRIC CO., Ltd., Fukui 915-8555 (JP)
(72) Inventor: Urita, Tomoya Orion Electric Co., Ltd., Echizen-city, Fukui 915-8555 (JP)
(74) Representative: Paget, Hugh Charles Edward

(57) **Abstract**

To provide a recording and reproducing apparatus capable of recording data infallibly without being dependent on the copyright protection information. A recording format selected during timer recording operation of a broadcast program by the DVD recording/reproducing unit 5 is compared with a copyright protection information detected by a copyright protection information detecting means 8b, and it is determined whether the selected recording format is suitable for recording the broadcast program, wherein if it is determined that the format is not suitable, the recording format is changed compulsorily to the suitable recording format. Further, if data already exists in the DVD being set, the data is copied to the HDD recording/reproducing unit 6 and the DVD is initialized before recording data, so that the space for recording the broadcast program designated by the user can be ensured.

## Description

### BACKGROUND OF THE INVENTION

### Field of the Invention

The present invention relates to a recording and reproducing apparatus capable of infallibly recording a broadcast program having copyright protection information appended thereto.

### Description of the Related Art

Prior art recording and reproducing apparatuses capable of recording broadcast programs disclose various methods for detecting copyright protection information when performing recording or setting timer recording, and changing the recording media or apparatuses for recording when it is determined that recording is not possible via the timer recording set up by the user based on the copyright protection information.

For example, Japanese Patent Application Laid-Open Publication No. 2003-169279 (Patent Document 1) discloses a recording method in which a plurality of recording and reproducing units have recording priority orders set respectively thereto, so that when the detected copyright protection information indicates that the program is a copy-once type program (in which recording is authorized only once), a recording and reproducing unit is selected based on the recording priority order to record the program.

In addition, Japanese Patent Application Laid-Open Publication No. 2004-280977 (Patent Document 2) discloses a method utilizing an HDD (hard disk drive) and a recording drive capable of recording data on a replaceable recording medium, wherein the recording drive is used to record television broadcast programs protected by the copyright protection information, and the HDD is used to record other programs.

However, according to the methods disclosed in Patent Documents 1 and 2, data will be recorded on the medium or the recording and reproducing apparatus other than that designated by the user, which may significantly restrict the purpose of use of the recorded data by the user.

### SUMMARY OF THE INVENTION

The present invention aims at solving the above-mentioned problems, wherein the first object of the invention is to provide a recording and reproducing apparatus capable of recording the desired video data infallibly without depending on the copyright protection information, and the second object of the invention is to provide a recording and reproducing apparatus capable of recording the desired video data infallibly without depending on the free space left in the recording medium or the like.

A recording and reproducing apparatus according to aspect 1 comprises a recording and reproducing means for reading data from and writing data to a recording medium, a recording format selecting means for selecting a recording format from multiple formats upon recording data to the recording medium, a recording means for recording a broadcast program, and a copyright protection information detecting means for detecting the copyright protection information of the broadcast program, wherein the apparatus further comprises a control means for determining, upon starting recording via the recording means, whether recording is possible or not by the recording format designated by the recording format selecting means based on the copyright protection information acquired by the copyright protection information detecting means, and if recording is not possible, switching the recording format compulsorily to a recordable recording format.

According to the arrangements of aspect 1 providing a recording and reproducing apparatus having multiple recording formats and recording data by selecting the desired recording format via a recording format selecting means, when the user records the desired broadcast program using the recording means, the copyright protection information is detected by the copyright protection information detecting means, and when it is determined that the recording format selected by the user is not suitable for recording the program, the control unit changes the recording format compulsorily to a format suitable for recording the program so as to prevent recording failure, by which recording is performed.

The recording and reproducing apparatus according to aspect 2 provides a recording and reproducing apparatus of aspect 1, wherein the copyright protection information detecting means detects whether the copyright protection information appended to the broadcast program indicates that recording is not allowed (copy never), copying is authorized only once (copy once) or copying is not restricted (copy free), and based on the copyright protection information, the control means switches the recording format.

According to the arrangement of aspect 2, the copyright protection information detecting means can determine more accurately whether the selected recording format is suitable for recording based on the type of the copyright protection information having been detected.

The recording and reproducing apparatus according to aspect 3 provides a recording and reproducing apparatus according to aspect 1 or 2, further comprising a broadcast program information acquisition means for acquiring the broadcast program information from a broadcast signal or a network, and a timer recording means for setting up timer recording of the recording and reproducing means by selecting a broadcast program from the broadcast program information, wherein when the broadcast program is selected from the broadcast program information and timer recording is performed by the timer recording means, the control means detects the copyright protection information of the broadcast program included in the broadcast program information via the copyright protection information detecting means, and when the recording format designated by the user through the recording format selecting means does not comply with the copyright protection information, switching the recording format compulsorily to the recording format in compliance with the copyright information so as to perform timer recording.

According to the arrangement of aspect 3, the broadcast program information can be acquired in advance by the broadcast program information acquisition means, timer recording can be set by the user selecting the desired broadcast program from the broadcast program information, and the copyright protection information detecting means can detect the copyright protection information of the broadcast program that the user wishes to record via timer recording and to change the recording format to an appropriate format based on the detected copyright protection information.

The recording and reproducing apparatus according to aspect 4 provides a recording and reproducing apparatus according to any one of aspects 1 through 3, wherein the recording and reproducing apparatus comprises multiple types of recording and reproducing means for reading data from and writing data to various recording media, respectively, and when the user records the desired data, if the storage space of the recording medium of the recording and reproducing means designated by the user is insufficient for recording all the data designated by the user because of an already-stored data, the already-stored data is saved in a recording medium of another recording and reproducing means other than the recording and reproducing means designated by the user, and the recording medium of the recording and reproducing means designated by the user is initialized.

According to the arrangement of aspect 4, when the user wishes to record the desired broadcast program to a recording medium, if the free space of the recording medium is smaller than the data to be recorded, the data stored in the recording medium designated by the user is saved in another recording medium, and the recording medium designate by the user is initialized so as to ensure sufficient recording area.

The recording and reproducing apparatus according to aspect 1 comprises a recording and reproducing means for reading data from and writing data to a recording medium, a recording format selecting means for selecting a recording format from multiple formats upon recording data to the recording medium, a recording means for recording a broadcast program, and a copyright protection information detecting means for detecting the copyright protection information of the broadcast program, wherein the apparatus further comprises a control means for determining, upon starting recording via the recording means, whether recording is possible or not by the recording format designated by the recording format selecting means based on the copyright protection information acquired by the copyright protection information detecting means, and if recording is not possible, switching the recording format compulsorily to a recordable recording format. According to the above arrangement, it becomes possible to prevent recording failure caused by the recording format designated by the user not complying with the copyright protection information, and thus, the broadcast program designated by the user can be recorded without fail.

The recording and reproducing apparatus according to aspect 2 relates to a recording and reproducing apparatus of aspect 1, wherein the copyright protection information detecting means detects whether the copyright protection information appended to the broadcast program indicates that recording is not allowed (copy never), copying is authorized only once (copy once) or copying is not restricted (copy free), and based on the copyright protection information, the control means switches the recording format. According to this arrangement, the recording format designated by the user is compared with the type of copyright protection information of the broadcast program to be recorded, and the appropriate recording format can be selected.

The recording and reproducing apparatus according to aspect 3 relates to a recording and reproducing apparatus according to aspect 1 or 2, wherein the recording and reproducing apparatus further comprises a broadcast program information acquisition means for acquiring the broadcast program information from a broadcast signal or a network, and a timer recording means for setting up timer recording of the recording and reproducing means by selecting a broadcast program from the broadcast program information, wherein when the broadcast program is selected from the broadcast program information and timer recording is performed by the timer recording means, the control means detects the copyright protection information of the broadcast program included in the broadcast program information via the copyright protection information detecting means, and when the recording format designated by the user through the recording format selecting means does not comply with the copyright protection information, switches the recording format compulsorily to the recording format in compliance with the copyright information so as to perform timer recording. According to this arrangement, upon setting up a timer recording of the broadcast program designated by the user based on the acquired broadcast program information, the copyright protection information of the broadcast program can be detected based on the broadcast program information, and at this time, even when the recording format designated by the user does not comply with the broadcast program to be recorded, the recording format is changed compulsorily in advance to comply with the copyright protection information, thereby enabling to record the program without fail.

The recording and reproducing apparatus according to aspect 4 relates to a recording and reproducing apparatus according to any one of aspects 1 through 3, wherein the recording and reproducing apparatus comprises multiple types of recording and reproducing means for reading data from and writing data to various recording media, respectively, and when the user records the desired data, if the storage space of the recording medium of the recording and reproducing means designated by the user is insufficient for recording all the data designated by the user because of an already-stored data, the already-stored data is saved in a recording medium of another recording and reproducing means other than the recording and reproducing means designated by the user, and the recording medium of the recording and reproducing means designated by the user is initialized. According to this arrangement, it is possible to prevent failure of recording the program caused by lack of free space in the recording medium selected by the user to record the broadcast program, and to record the designated broadcast program in the recording medium designated by the user without fail.

### BRIEF DESCRIPTION OF THE DRAWINGS

FIG. 1 is a block diagram showing the configuration of a recording and reproducing apparatus according to the preferred embodiment of the present invention;
FIG. 2 is a flowchart showing the operation immediately prior to the recording operation of the recording and reproducing apparatus according to the embodiment; and
FIG. 3 is a flowchart showing the operation when setting up timer recording of the recording and reproducing apparatus according to the embodiment.

### DETAILED DESCRIPTION OF THE PREFERRED EMBODIMENTS

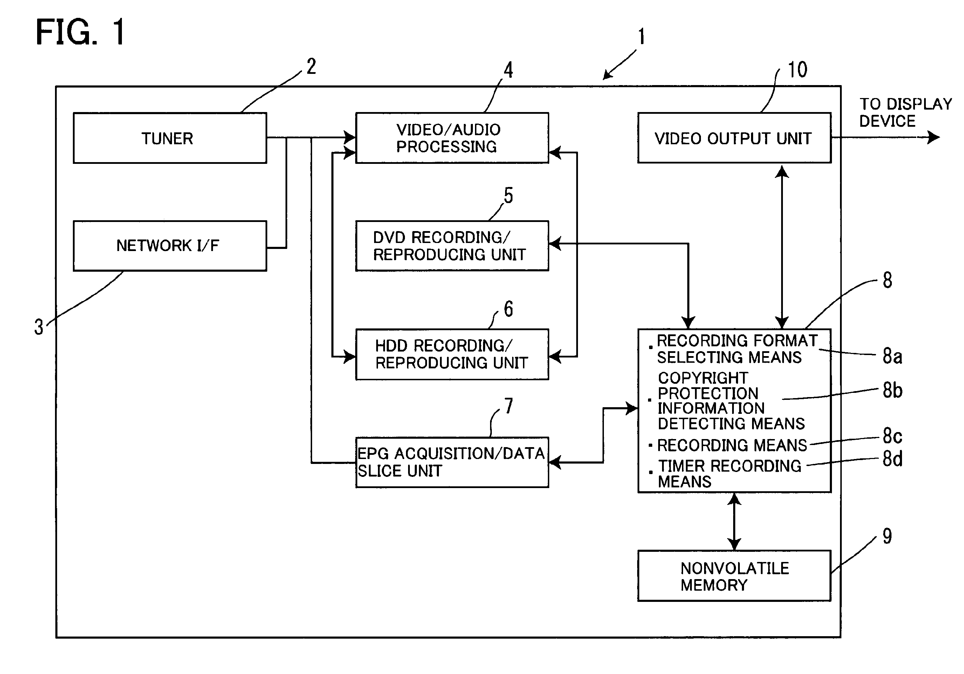

Now, the best mode for carrying out the present invention will be described with reference to FIGS. 1 through 3. Of course, the present invention can be applied easily to arrangements other than that described in the embodiment within the scope of the present invention.

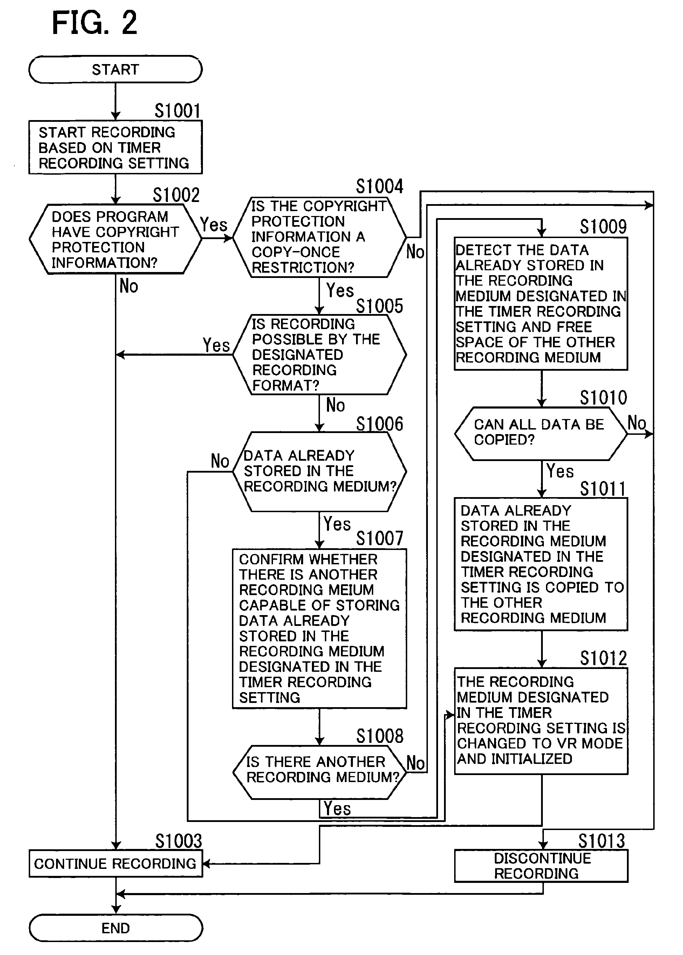

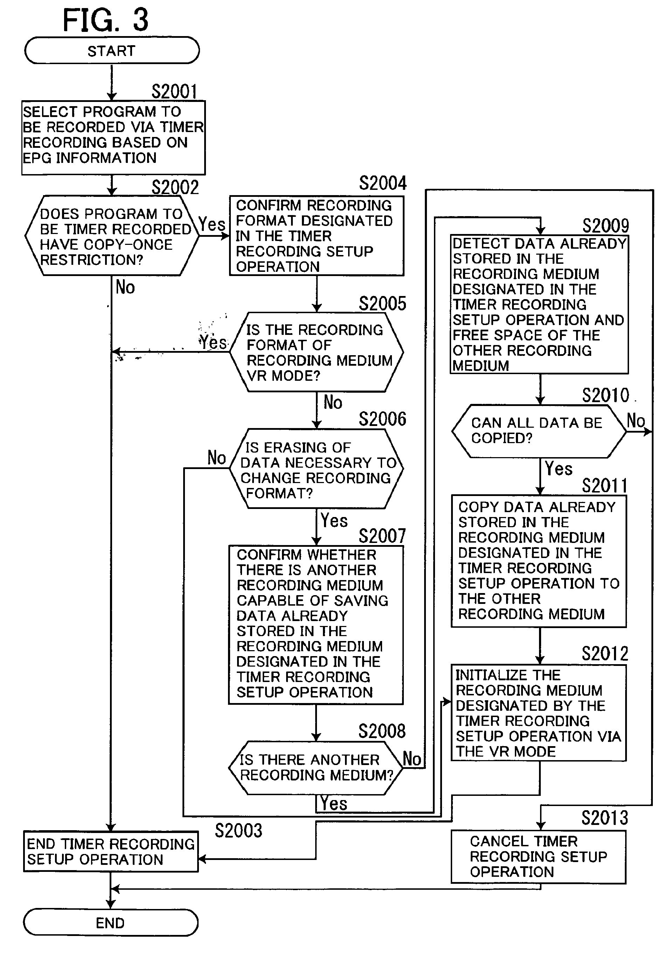

FIGS. 1 through 3 illustrate the embodiment of the present invention, wherein FIG. 1 is a block diagram illustrating the configuration of the recording and reproducing apparatus according to the present embodiment. FIG. 2 is a flowchart showing the operation of the recording and reproducing apparatus during recording operation, and FIG. 3 is a flowchart showing the operation for setting up timer recording using an EPG (electronic program guide) of the recording and reproducing apparatus.

The configuration of the recording and reproducing apparatus according to the present embodiment will be described with reference to FIG. 1. Reference number 1 denotes a recording and reproducing apparatus. Reference number 2 denotes a tuner for receiving broadcast signals, and reference number 3 denotes a network interface (I/F) for connecting the apparatus to the internet. Reference number 4 is a video/audio processing unit for processing video/audio data, and reference number 5 is a DVD recording/reproducing unit for reading data stored in a DVD (digital versatile disk) or writing data into the DVD. Reference number 6 is an HDD recording/reproducing unit for reading data stored in an HDD (hard disk drive) or writing data into the HDD. Reference number 7 denotes an EPG acquisition/data slice unit for acquiring the EPG (electronic program guide = broadcast program information) from broadcast signals received via a tuner or from the network via the network I/F 3, and braking it up into individual information. Reference number 8 denotes a CPU for controlling the overall operation of the recording and reproducing apparatus 1. The CPU 8 includes a recording format selecting means 8a for selecting the video/audio recording format, a copyright protection information detecting means 8b for detecting the copyright protection information from the data acquired from the broadcast signals or the EPG acquisition/data slice unit, a recording means 8c for recording data on the DVD recording/reproducing unit 5 or the HDD recording/reproducing unit 6, and a timer recording means 8d for setting up timer recording in advance to record a broadcast program. Reference number 9 denotes a nonvolatile memory for storing information necessary for the operation of the recording and reproducing apparatus 1 such as the EPG and the timer recording information created via the timer recording means 8d. Hereafter, the recording format in compliance with the copyright protection is called the VR mode, and the recording format not in compliance with the copyright protection is called the video mode. Reference number 10 denotes a video output unit for outputting video/audio of the broadcast program received via the tuner 2 or stored in the DVD recording/reproducing unit 5 or the HDD recording/reproducing unit 6.

Next, the operation of the recording and reproducing apparatus 1 during recording will be described with reference to FIG. 2. Based on a timer recording operation set up in advance, the recording is started (S1001). The copyright protection information detecting means 8b detects whether or not copyright protection information exists for the received broadcast program (S1002). Here, if there is no protection information detected or if the information indicates that the program is copy free (recording is not restricted), the recording is continued (S1003). If the copyright protection information is detected in step S1002, it is determined whether or not the information denotes a copy-once restriction (S1004). If the information does not denote a copy-once restriction, it means that the program has a copy-never restriction (recording not allowed), so in that case, the recording is discontinued (S1013). When it is determined in step S1004 that the program has a copy-once restriction (recording is allowed only once), it is determined whether recording is possible or not based on the recording format designated in advance (S1005). That is, if the recording format designated in advance is a first recording format, the procedure advances to step S1003, and if it is a second recording format, the process advances to the following step. It is detected whether already-stored data exists in a DVD which is a recording medium set to the DVD recording/reproducing unit 5 (S1006). If data does not exist, the procedure advances to step S1012 described later, and if data exists, it is determined whether there is another recording medium capable of recording the data, which in the present embodiment is the HDD recording/reproducing unit 6 (S1007). If no other recording medium exists, the recording is discontinued (S1013). In the present embodiment, the other recording medium refers to the HDD recording/reproducing unit 6, so the data quantity already stored in the DVD and the free space in the HDD recording/reproducing unit 6 are detected (S1009). Based on the free space and the data quantity detected in step S1009, it is determined whether all the data already stored in the DVD can be copied to the HDD recording/reproducing unit 6 (S1010), and if copying is determined as possible, all the data already stored in the DVD are saved in the HDD recording/reproducing unit 6 (S1011), the DVD is initialized via the VR mode (S1012), and the recording is continued (S1003). If it is determined that the data cannot be copied since there is not enough free space, the recording is discontinued (S1013).

Next, the operation of the recording and reproducing apparatus for setting up timer recording using EPG will be described with reference to FIG. 3. The desired broadcast program is selected from the EPG, and the setting of timer recording is performed (S2001). The copyright protection information of the selected broadcast program is detected from the EPG to determine whether the program has a copy-once restriction or not (S2002). Here, if the copyright protection information is not detected, the timer recording setup operation is ended as it is (S2003). If the broadcast program is determined to have a copy-once restriction in step S2002, the recording format designated at the time of timer recording setup operation using EPG is confirmed (S2004). It is determined whether the recording format is the VRmode or not (S2005), and if it is the VRmode, the timer recording setup operation is ended as it is (S2003). If the recording format is not the VR mode, then in order to change the recording format to the VR mode, it is determined whether the DVD being the recording medium set in the DVD recording/reproducing unit 5 has data already stored therein, and if data exists, it is determined whether erasing of data is necessary or not (S2006). If no data exists and there is no need to erase data, the procedure advances to step S2012 described later, and if data exists, it is confirmed whether there is another recording medium capable of recording that data, which in the present embodiment is the HDD recording/reproducing unit 6 (S2007). Then it is determined whether or not there is another recording medium capable of recording the data, which in the present embodiment is the HDD recording/reproducing unit 6 (S2008), and if the other recording medium does not exist, the recording is discontinued (S2013). In the present embodiment, the other recording medium refers to the HDD recording/reproducing unit 6, so in other words, there is another recording medium according to the embodiment, so the data quantity already stored in the DVD and the free space of the HDD recording/reproducing unit 6 are detected (S2009). In step S2009, based on the detected free space and the data quantity, it is determined whether all the data already stored in the DVD can be copied to the HDD recording/reproducing unit 6 or not (S2010), and when it is determined that copying is possible, all the data already stored in the DVD are saved in the HDD recording/reproducing unit 6 (S2011), the DVD is initialized in the VR mode (S2012), and the timer recording setup operation is ended (S2003). When it is determined that copying cannot be performed since there is not enough free space, the timer recording setup is cancelled (S2013).

As described above, according to the recording and reproducing apparatus of the present embodiment, the copyright protection information can be detected when performing recording operation or performing timer recording setup operation, the copyright protection information can be compared with the selected recording format, and when it is determined that the selected recording format is not suitable for recording the broadcast program with a recording restriction based on the copyright protection information (which in the present embodiment is the video mode), the apparatus automatically selects the recording format corresponding to the copyright protection information (which in the present embodiment is the VR mode), which enables recording errors to be prevented without the user recognizing the copyright protection information when recording the desired program. Furthermore, if the recording medium set in the apparatus by the user for recording has data already stored therein, the existing data is copied to another recording/reproducing unit that does not use that recording medium, and then the recording medium is initialized so as to protect all the existing data while preventing recording failure of the broadcast program to be newly recorded.

The embodiment of the present invention has been described in detail, but the present invention is not restricted to the embodiment, and various modifications are capable within the scope of the present invention. For example, the recording/reproducing units according to the present embodiment are the DVD recording/reproducing unit 5 and the HDD recording/reproducing unit 6, but they can both be DVD recording/reproducing units or HDD recording/reproducing units. Moreover, the multiple recording formats according to the present embodiment are the video mode and the VR mode, but other recording formats can be adopted.

## Claims

1. A recording and reproducing apparatus comprising:
a recording and reproducing means for reading data from and writing data to a recording medium;
a recording format selecting means for selecting a recording format from multiple formats upon recording data to the recording medium;
a recording means for recording a broadcast program; and
a copyright protection information detecting means for detecting the copyright protection information of the broadcast program; wherein
the apparatus further comprises a control means for determining, upon starting recording via the recording means, whether recording is possible or not by the recording format designated by the recording format selecting means based on the copyright protection information acquired by the copyright protection information detecting means, and if recording is not possible, switching the recording format compulsorily to a recordable recording format.

2. The recording and reproducing apparatus according to claim 1, wherein the copyright protection information detecting means detects whether the copyright protection information appended to the broadcast program indicates that recording is not allowed (copy never), copying is authorized only once (copy once) or copying is not restricted (copy free), and based on the copyright protection information, the control means switches the recording format.

3. The recording and reproducing apparatus according to claim 1 or claim 2, wherein the recording and reproducing apparatus further comprises a broadcast program information acquisition means for acquiring the broadcast program information from a broadcast signal or a network, and a timer recording means for setting up timer recording of the recording and reproducing means by selecting a broadcast program from the broadcast program information, wherein when the broadcast program is selected from the broadcast program information and timer recording is performed by the timer recording means, the control means detects the copyright protection information of the broadcast program included in the broadcast program information via the copyright protection information detecting means, and when the recording format designated by the user through the recording format selecting means does not comply with the copyright protection information, switches the recording format compulsorily to the recording format in compliance with the copyright information so as to perform timer recording.

4. The recording and reproducing apparatus according to any one of claims 1 through 3, wherein the recording and reproducing apparatus comprises multiple types of recording and reproducing means for reading data from and writing data to various recording media, respectively, and when the user records the desired data, if the storage space of the recording medium of the recording and reproducing means designated by the user is insufficient for recording all the data designated by the user because of an already-stored data, the already-stored data is saved in a recording medium of another recording and reproducing means other than the recording and reproducing means designated by the user, and the recording medium of the recording and reproducing means designated by the user is initialized.
